# EUROPÄISCHE PATENTSCHRIFT

(11) **EP 2 047 110 B1**
(45) Veröffentlichungstag und Bekanntmachung des Hinweises auf die Patenterteilung: **03.08.2011**
(21) Anmeldenummer: 07723027.4
(22) Anmeldetag: 03.03.2007
(51) Int. Cl.: F15B 13/00

(54) **FLUIDTECHNISCHE VORRICHTUNG**
HYDRAULICALLY OPERATED DEVICE
DISPOSITIF TECHNIQUE FLUIDIQUE

(30) Priorität: 29.07.2006 DE 202006011624 U
(43) Veröffentlichungstag der Anmeldung: 15.04.2009
(73) Patentinhaber: FESTO AG & Co. KG, 73734 Esslingen (DE)
(72) Erfinder: BLASSMANN, Lars, 70597 Stuttgart (DE); GIOUSOUF, Metin, 73732 Esslingen (DE); METZGER, Uwe, 73105 Dürnau (DE)
(74) Vertreter: Abel, Martin
(86) Internationale Anmeldenummer: PCT/EP2007/001834
(87) Internationale Veröffentlichungsnummer: WO 2008/014829

(56) Entgegenhaltungen:
- DE-A1- 2 849 133
- DE-C1- 4 209 000
- US-A- 3 929 356
- US-A- 4 600 221

## Beschreibung

Die Erfindung betrifft eine fluidtechnische Vorrichtung, mit mindestens einem Anschlusskörper, der von mindestens einem Fluidkanal durchsetzt ist, der über eine Anschlussöffnung zur Außenfläche des Anschlusskörpers ausmündet, und mit mindestens einem elastomere Eigenschaften aufweisenden elastischen Fluidschlauch, der mittels einer Anschlusseinrichtung im Rahmen einer Steckverbindung an den mindestens einen Fluidkanal angeschlossen oder anschließbar ist, wobei die Anschlusseinrichtung einen an dem Anschlusskörper in Richtung einer zur Längsachse der Anschlussöffnung quer verlaufenden Betätigungsachse verschiebbar gelagerten oder lagerbaren Halteschieber enthält, der von einer Durchtrittsöffnung durchsetzt ist, die einen Durchsteckabschnitt und einen diesbezüglich schmäleren, sich in Richtung der Betätigungsachse daran an-schließenden Halteabschnitt aufweist, wobei der Halteschieber wahlweise in einer Freigabestellung, in der der Durchsteckabschnitt mit der Anschlussöffnung fluchtet, und in einer Haltestellung, in der der Halteabschnitt mit der Anschlussöffnung fluchtet, positionierbar ist.

Eine fluidtechnische vorrichtung dieser Art kann beispielsweise eine Ventileinrichtung umfassen, die über einen Anschlusskörper verfügt, der das lösbare Anschließen von zu Verbrauchern führenden Fluicischläuchen ermöglicht.

Aus der DE 2849133 A1 geht eine fluidtechnische Vorrichtung der eingangs genannten Art hervor, die von einem Bremssystem innerhalb eines Kraftfahrzeuges gebildet ist. Ein von einem Ventilgehäuse gebildeter Anschlusskörper ist hier mit mehreren Fluidkanälen ausgestattet, die jeweils über eine Anschlussöffnung zur Außenfläche des Ventilgehäuses ausmünden. An jede Anschlussöffnung ist eine Bremsleitung anschließbar, wobei die hierzu verwendete Anschlusseinrichtung einen Anschlussstecker und einen diesem zugeordneten Halteschieber enthält. Die Bremsleitung wird auf eine Anschlusstülle des Anschlusssteckers aufgesteckt und über den Anschlussstecker an das Ventilgehäuse angeschlossen. Dieses Anschließen geschieht durch Einstecken des Anschlusssteckers in die zugeordnete Anschlussöffnung, und zwar unter Hindurchgreifen durch eine in dem Halteschieber ausgebildete Durchtrittsöffnung. Letztere hat eine Schlüssellochkontur und kann durch. Verschieben des Halteschiebers so positioniert werden, dass entweder in einer Freigabestellung ein einen größeren Querschnitt aufweisender Durchsteckabschnitt mit der Anschlussöffnung fluchtet oder, in einer Haltestellung, ein einen geringeren Querschnitt aufweisender Halteabschnitt. In der Haltestellung greift der Schieber mit den Halteabschnitt flankierenden Schieberabschnitten in eine Umfangsnut des Anschlusssteckers ein und verriegelt diesen, sodass er an dem Anschlusskörper axial fixiert ist.

Bei dieser bekannten Vorrichtung bedarf es zum lösbaren Anschließen der Fluidschläuche einer zwingenden Ausstattung des jeweiligen Fluidschlauches mit einem steckerartigen Anschlussstück. Zum Herstellen und Lösen der Anschlussverbin-dung wird stets der Anschlussstecker eingesteckt oder herausgezogen, wobei der Fluidschlauch ständig am Anschlussstecker verbleibt. Die Verschlauchung der fluidtechnischen Vorrichtung erfordert daher einen relativ hohen fertigungstechnischen Aufwand und ist mit einer relativ umständlichen Handhabung verbunden.

Es ist auch bereits bekannt, die Anschlussmaßnahmen für Fluidschläuche in fluidtechnischen Vorrichtungen so auszuführen, dass die Schnittstelle für das Herstellen und Lösen der Fluidverbindungen unmittelbar dem jeweiligen Fluidschlauch zugeordnet ist. Dieser kann ohne vorherige Bestückung mit einem Anschlussstecker direkt in einer einem Anschlusskörper zugeordneten Anschlusseinrichtung fixiert werden. Einen Stand der Technik dieser Art offenbart beispielsweise die DE 19755743 C1. Nachteilig bei derartigen Anschlussvorrichtungen ist die schwierige Handhabbarkeit, insbesondere zum Lösen eines Fluidschlauches, wenn es sich um sehr kleine Schlauchquerschnitte handelt.

Die US 4,600,221 beschreibt bereits ein Verbindungssystem für flexible Schläuche, bei dem ein Schlauch ummittelbar durch einen Halteschieber fixierbar ist. Zum Einführen und Herausziehen des Schlauches muss der Halteschieber hier jedoch jedes Mal entfernt werden. Anders als bei der Anordnung gemäß DE 2849133 A1 dient hier nicht der engere, sondern der breitere Abschnitt der Öffnung des Halteschiebers zum Festhalten des Schlauches.

Es ist die Aufgabe der vorliegenden Erfindung, eine fluidtechnische Vorrichtung zu schaffen, die über kostengünstig herstellbare und einfach handhabbare Maßnahmen zum Anschließen von Fluidschläuchen verfügt.

Zur Lösung dieser Aufgabe ist bei einer fluidtechnischen Vorrichtung der eingangs genannten Art vorgesehen, dass der angeschlossene Fluidschlauch unmittelbar selbst durch die Durchtrittsöffnung des Halteschiebers hindurch in die Anschlussöffnung des Anschlusskörpers eingesteckt ist, wobei die Breite der Durchtrittsöffnung im Bereich des Durchsteckabschnittes größer und im Bereich des Halteabschnittes geringer ist als der nominale Außendurchmesser des Fluidschlauches, derart, dass der Fluidschlauch in der Freigabestellung des Halteschiebers unbehindert durch die Durchtrittsöffnung hindurch in die Anschlussöffnung einsteckbar und aus dieser herausziehbar ist und in der Haltestellung des Halteschiebers unter Verformung seiner Schlauchwandung klemmend von den den Halteabschnitt seitlich begrenzenden Schieberabschnitten festgehalten ist.

Das bisher nur zu Verriegelungszwecken eingesetzte Anschlussprinzip der DE 2849133 wird somit in modifizierter Form zur unmittelbaren Klemmbefestigung von Fluidleitungen eingesetzt. Damit verbunden ist der Vorteil, dass auf einen zusätzlichen Anschlussstecker verzichtet werden kann. Es ist der Fluidschlauch unmittelbar selbst, der mit dem Halteschieber kooperiert. Dessen Durchtrittsöffnung ist so gestaltet, dass der Durchsteckabschnitt ein problemloses Hindurchstecken der Fluidleitung ermöglicht, wenn diese angeschlossen oder entfernt werden soll. Um den eingesteckten Fluidschlauch zu fixieren, wird der Halteschieber aus der Freigabestellung in die Haltestellung verlagert, sodass sein im Vergleich zum Nenn-Außendurchmesser des Fluidschlauches schmälerer Halteabschnitt reiterähnlich auf den Außenumfang der Fluidleitung aufgedrückt wird, was zu einer zumindest geringfügigen Verformung der Schlauchwandung des Fluidschlauches führt und eine Klemmung des Fluidschlauches zur Folge hat. In der Regel wird der Fluidschlauch hierbei radial minimal eingeschnürt werden, was sich jedoch auf den Fluiddurchsatz nicht markant auswirkt. Das leichte Einschnüren des Fluidschlauches bewirkt zusätzlich zum rein reibschlüssigen Kontakt auch noch einen gewissen Formschluss in der Längsrichtung des Fluidschlauches, der sich einem unerwünschten Herausziehen des Fluidschlauches widersetzt. Bei entsprechender Ausgestaltung der die Schlauchwandung beaufschlagenden Schieberabschnitte kann auch ein geringfügiges Eindringen des Halteschiebers in die Schlauchwandung auftreten, was aufgrund des hierbei auftretenden Formschlusses eine weitere Erhöhung der Zugfestigkeit der hergestellten Verbindung zur Folge hat. Um den angeschlossen Fluidschlauch zu lösen, braucht lediglich der Halteschieber wieder in die Freigabestellung verlagert zu werden, sodass der Halteabschnitt vom Außenumfang des Fluidschlauches entfernt wird und der Fluidschlauch in dem Durchsteckabschnitt zu liegen kommt. Hier kann dann der Fluidschlauch ungehindert herausgezogen werden.

Vorteilhafte Weiterbildungen der Erfindung gehen aus den Unteransprüchen hervor.

Bei einer besonders zweckmäßigen Ausführungsform ist die Durchtrittsöffnung vergleichbar dem für einen Bartschlüssel geeigneten Schlüsselloch gestaltet. Die Übergänge zwischen den die beiden Öffnungsabschnitte begrenzenden Schieberabschnitten können insbesondere abgerundet sein, sodass der Halteschieber mit verhältnismäßig geringer Betätigungskraft auf dem Fluidschlauch verankerbar ist.

Ein besonders inniger, formschlüssiger Eingriff mit der Schlauchwandung kann erzielt werden, wenn die den Halteabschnitt begrenzenden Schieberabschnitte eine sich zum Halteabschnitt hin verjüngende Querschnittskontur aufweisen, insbesondere vergleichbar einer Schneide.

Um den Halteschieber bei seiner Verlagerung zwischen den beiden möglichen Stellungen optimal zu führen, kann der Halteschieber mindestens ein sich in Richtung der Betätigungsachse erstreckendes Langloch aufweisen, das von einem am Anschlusskörper fixierten und von diesem wegragenden Bolzen durchsetzt ist. Dieser Bolzen kann als Führungsbolzen fungieren. Außerdem kann dieser Bolzen bei Bedarf auch einen Anschlug bilden, der durch Kooperation mit den das Langloch endseitig begrenzenden Schieberabschnitten den maximalen Verschiebeweg für den Halteschieber vorgibt.

Der den Halteschieber durchsetzende Bolzen kann auch vom Schaft einer Spannschraube gebildet sein. Diese Spannschraube ist mehr oder weniger weit in den Anschlusskörper einschraubbar, sodass der Halteschieber zwischen dem Schraubenkopf und dem Anschlusskörper festklemmbar ist, wenn eine eingestellte Schieberstellung lösbar fixiert werden soll.

Bei dem Halteschieber handelt es sich vorzugsweise um ein bezüglich des Anschlusskörpers gesondertes Bauteil. Er kann hier insbesondere aus Metall bestehen. Allerdings ist auch eine einstückige Ausgestaltung von Halteschieber und Anschlusskörper möglich, in welchem Fall man in der Regel auf eine Realisierung in Kunststoffmaterial zugreifen wird.

Die Kunststoffvariante wird man insbesondere dann bevorzugen, wenn der Halteschieber über einen elastisch verformbaren Gelenkabschnitt in beweglicher Weise am Anschlusskörper aufgehängt ist. Durch diese Aufhängung kann sehr einfach eine verliersichere Verbindung zwischen Halteschieber und Anschlusskörper erreicht werden. Die Elastizität des Gelenkabschnittes ist insbesondere so ausgebildet, dass der Halteschieber relativ zum Anschlusskörper zumindest in Richtung seiner Längsachse verlagerbar ist und zweckmäßigerweise auch an den Anschlusskörper heran und von diesem weg geschwenkt werden kann.

Eine anzuschließende Fluidleitung kann beispielsweise bei vom Anschlusskörper weggeschwenktem Halteschieber durch dessen Durchsteckabschnitt hindurchgesteckt und mit schräger Ausrichtung an die Anschlussöffnung angesetzt werden. Anschließend wird der Halteschieber bei gleichzeitiger axialer Verlagerung an den Anschlusskörper herangeschwenkt, wobei zugleich die Fluidleitung im Bereich ihres Anschlussendes mehr und mehr koaxial bezüglich der Anschlussöffnung ausgerichtet wird, bis sie schließlich im gewünschten Umfange eingesteckt ist. Der nunmehr an den Anschlusskörper herangeschwenkte Halteschieber kann in einem abschließenden Arbeitsvorgang linear verschoben werden, sodass sein Halteabschnitt auf den Außenumfang des Fluidschlauches aufgeschoben wird.

Bei diesem letztgenannten Verschiebevorgang kann bei entsprechender Ausgestaltung der Vorrichtung auch eine Verriegelung zwischen Halteschieber und Anschlusskörper bewirkt werden, die ein unerwünschtes Wegschwenken des Halteschiebers vom Anschlusskörper verhindert. Hierzu kann am Halteschieber und/oder am Anschlusskörper eine Hakenstruktur angeordnet sein, die in der Verriegelungsstellung eine am jeweils anderen Element ausgebildete Verankerungsstruktur hintergreift.

Über den elastisch verformbaren Gelenkabschnitt kann insbesondere eine einstückige Verbindung zwischen dem Halteschieber und dem Anschlusskörper hergestellt sein.

Eine optimale Zentrierung des Fluidschlauches wird erreicht, wenn in den sich an die Anschlussöffnung anschließenden Endabschnitt des Fluidkanals des Anschlusskörpers eine den eingesteckten Fluidschlauch umschließende Zentrierhülse eingesetzt ist. Die Zentrierhülse kann insbesondere im Presssitz fixiert sein. Man hat hierdurch auch die Möglichkeit, für unterschiedliche Schlauchdurchmesser auf ein und denselben Typ von Anschlusskörpern zurückzugreifen, wobei man die individuelle Anpassung an den jeweiligen Schlauchdurchmesser durch das Einsetzen von Zentrierhülsen unterschiedlicher Innendurchmesser bewerkstelligt.

In dem vorgenannten Endabschnitt des Fluidkanals befindet sich zweckmäßigerweise auch eine ringförmige Dichtung, die den eingesteckten Fluidschlauch am Außenumfang dichtend umgreift und gleichzeitig auch in Dichtkontakt mit der Wandung des Fluidkanals steht. Dieser Dichtungsring kann in koaxialer Ausrichtung axial zwischen der Zentrierhülse und einer dieser axial gegenüberliegenden Ringstufe des Fluidkanals unverlierbar fixiert sein.

Die fluidtechnische Vorrichtung kann mit nur einer Anschlusseinrichtung der erfindungsgemäßen Art, aber auch gleichzeitig mit mehreren solchen Anschlusseiwrichtungen ausgestattet sein. Enthält der Anschlusskörper mehrere in einer Aufreihungsrichtung nebeneinander angeordnete Anschlussöffnungen, können auch die Anschlusseinrichtungen entsprechend nebeneinanderliegend aufgereiht sein. Hierbei besteht auch die Möglichkeit, die Halteschieber so auszubilden und anzuordnen, dass sie sich in ihrer Lage gegenseitig stabilisierten. Die zur Verschiebeführung der Halteschieber erforderlichen Maßnahmen können dadurch auf ein Minimum reduziert werden.

Bei dem Anschlusskörper kann es sich beispielsweise um einen mit einem oder mehreren, bevorzugt elektrisch betätigbaren, Ventilen bestückten Ventilträger handeln. Der Anschlusskörper kann aber beispielsweise auch unmittelbar selbst Bestandteil eines Ventils sein oder auch eines mit Fluidkraft zu betreibenden Antriebes, beispielsweise eines Linearantriebes oder Drehantriebes.

Die fluidtechnische Vorrichtung ist insbesondere für einen Betrieb mit Druckluft ausgelegt. Sie eignet sich jedoch auch für den Betrieb mit anderen Gasen und auch mit Flüssigkeiten.

Nachfolgend wird die Erfindung anhand der beiliegenden Zeichnung näher erläutert. In dieser zeigen:
- Figur 1: eine perspektivische Teildarstellung einer mögli- chen ersten Bauform der erfindungsgemäßen fluid- technischen Vorrichtung, wobei der Übersichtlich- keit wegen nur einer der möglichen mehreren an- schließbaren Fluidschläuche abgebildet ist,
- Figur 2: die Anordnung aus Figur 1 bei vom Anschlusskörper komplett weggeschwenkten Halteschiebern,
- Figur 3: einen Schnitt durch die Anordnung aus Figur 1 gemäß Schnittlinie III-III, wobei der Halteschieber bei Einnahme der Haltestellung gezeigt ist,
- Figur 4: die in Figur 3 gezeigte Anordnung bei vom An- schlusskörper weggeschwenktem Halteschieber im Mo- ment des Einführens des anzuschließenden Flu- idschlauches, wobei durch Pfeile der anschließende Bewegungsablauf des Halteschiebers angedeutet ist,
- Figur 5: einen Schnitt durch die Anordnung aus Figur 1 im Bereich einer Anschlusseinrichtung gemäß Schnittli- nie V-V aus Figuren 1 und 9, wobei eine mögliche Verformung des festgeklemmten Fluidschlauches er- sichtlich ist,
- Figur 6: eine perspektivische Teildarstellung einer modifi- zierten Bauform der fluidtechnischen Vorrichtung, wobei wiederum nur einer von mehreren anschließba- ren Fluidschläuchen gezeigt ist,
- Figur 7: die Anordnung aus Figur 6 im Schnitt gemäß Schnitt- linie VII-VII und im Bereich des Fluidkanals des Anschlusskörpers, teilweise aufgebrochen, das Ganze unmittelbar vor dem Festziehen einer Spannschraube,
- Figur 8: die Anordnung aus Figur 7 bei in der Freigabestel- lung befindlichem Halteschieber und
- Figuren 9 und 10: Schnitte durch die Anordnungen aus Figuren 7 und 8 gemäß Schnittlinie IX-IX und X-X.

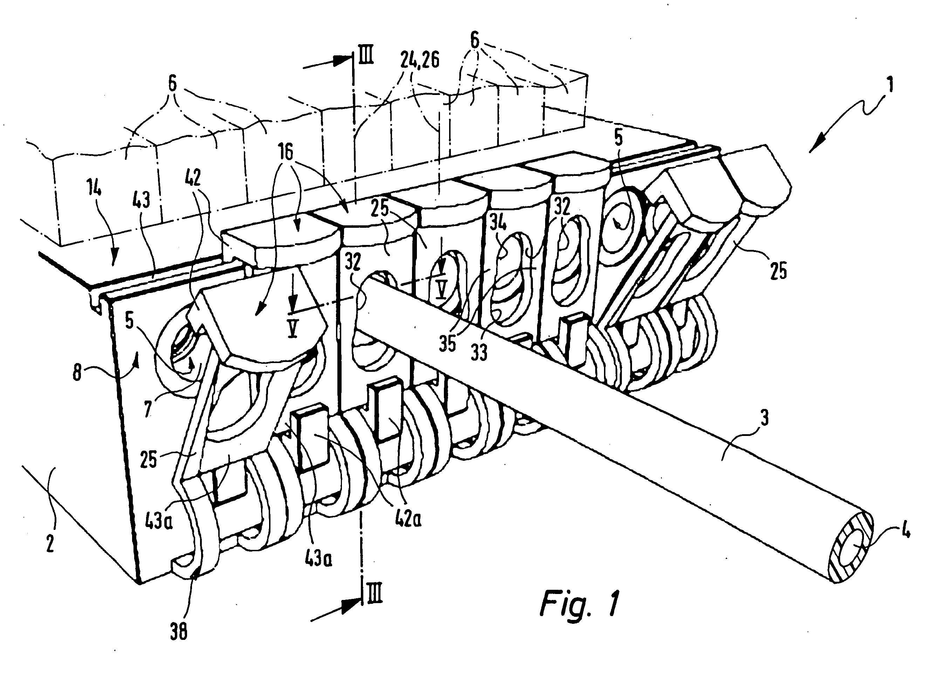

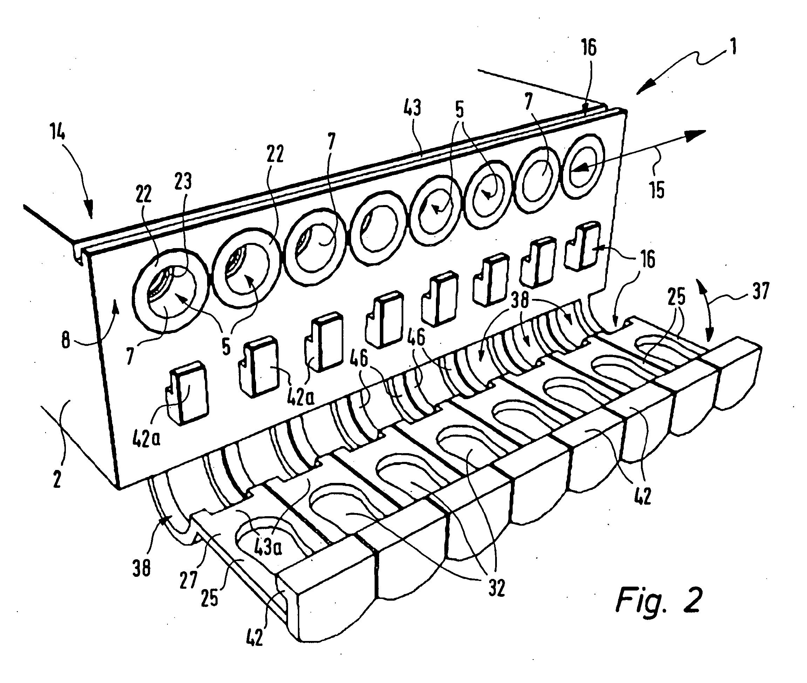

Die in Figuren 1, 2 und 6 in ihrer Gesamtheit abgebildete fluidtechnische Vorrichtung 1 enthält mindestens einen, bei den Ausführungsbeispielen genau einen Anschlusskörper 2, an den mindestens ein über elastomere Eigenschaften verfügender elastischer Fluidschlauch 3 lösbar anschließbar ist, um eine Fluidverbindung zwischen dem in dem Fluidschlauch 3 verlaufenden Schlauchkanal 4 und einem den Anschlusskörper 2 durchsetzenden Fluidkanal 5 herzustellen.

Bei dem Anschlusskörper 2 handelt es sich insbesondere um einen Ventilträger, der mit einem oder mehreren zur Steuerung von Fluidströmen geeigneten Ventilen 6 bestückbar oder bestückt ist. Die Ventile 6 sind elektrisch aktivierbar, entweder direkt oder indirekt mittels Vorsteuerstufen. In der Zeichnung sind sie nur in Figur 1 und auch dort nur schematisch angedeutet.

Der Anschlusskörper 2 hat insbesondere eine block- oder plattenförmige Gestalt. Abweichende Formgebungen sind jedoch ebenfalls möglich.

Bei den mit je einem Fluidschlauch 3 verbindbaren Fluidkanälen 5 des Ausführungsbeispiels handelt es sich um Arbeitskanäle, über die die Zufuhr und Abfuhr von Druckmedium zu beziehungsweise von einem nicht dargestellten Verbraucher stattfindet, beispielsweise ein mittels Fluidkraft betätigbarer Antrieb. Die Fluidkanäle 5 münden jeweils mit einer Anschlussöffnung 7 zu einer im Folgenden als Anschlussfläche 8 bezeichneten Außenfläche des Anschlusskörpers 2 aus, wobei der anzuschließende Fluidschlauch 3 durch die Anschlussöffnung 7 hindurch in den sich daran anschließenden Kanalendabschnitt 12 des Fluidkanals 5 gemäß Pfeil 13 einsteckbar ist. Der Fluidschlauch 3 stellt dann die Fluidverbindung zwischen dem betreffenden Fluidkanal 5 und dem externen Verbraucher her.

Die Fluidkanäle 5 verlaufen im Innern des Anschlusskörpers 2 und münden mit ihren den Anschlussöffnungen 7 entgegengesetzten Enden zu einer Bestückungsfläche 14 aus, an der die Ventile 6 installiert sind. Dort kommunizieren sie mit Kanälen der Ventile 6.

In nicht näher dargestellter Weise ist der Anschlusskörper 2 in der Regel noch von mindestens einem Speisekanal und mindestens einem Abführkanal durchsetzt, über die eine zentrale Einspeisung und Abfuhr des Druckmediums erfolgt. Diese Kanäle münden so zu den Bestückungsflächen 14, dass sie mit sämtlichen Ventilen 6 kommunizieren.

Bei einer nicht dargestellten Ausführungsform sind die Ventile 6 in den Anschlusskörper 2 integriert. Der Anschlusskörper 2 kann insbesondere ein unmittelbarer Bestandteil eines oder mehrerer Ventile sein, indem er beispielsweise, gemäß einer nicht dargestellten Bauform, ein Ventilgehäuse bildet.

Abweichend von der abgebildeten Mehrfachausstattung mit zum Anschluss eines Fluidschlauches 3 geeigneten Anschlussöffnungen 7, kann der Anschlusskörper 2 auch über nur eine einzige solche Anschlussöffnung 7 verfügen.

Enthält der Anschlusskörper 2 eine Mehrzahl von Anschlussöffnungen 7, sind diese zweckmäßigerweise in einer durch einen Doppelpfeil bei 15 angedeuteten Aufreihungsrichtung aufeinanderfolgend angeordnet. Die Aufreihungsrichtung 15 kann insbesondere mit der Längsrichtung des Anschlusskörpers 2 zusammenfallen.

Bei dem Anschlusskörper 2 kann es sich um einen in Längsrichtung ununterbrochenen einheitlichen Körper handeln, oder aber um ein segmentiertes Gebilde. Die einzelnen Segmente können jeweils mindestens eine der Anschlussöffnungen 7 aufweisen und sind in der Aufreihungsrichtung 15 unter Bildung einer Baugruppe insbesondere lösbar aneinander angesetzt.

Die anschließbaren Fluidschläuche 3 sind aufgrund ihrer Elastizität leicht biegbar. Sie können auch problemlos mit einem geeigneten Schneidwerkzeug auf die jeweils gewünschte Länge abgelängt werden. Es handelt sich um Kunststoffschläuche, bevorzugt aus Polyurethanmaterial.

Jeder Anschlussöffnung 7 ist eine Anschlusseinrichtung 16 zur lösbaren, klemmenden Fixierung eines beliebigen Fluidschlauches 3 zugeordnet. Die Anschlusseinrichtung 16 ist zur Gänze Bestandteil des Anschlusskörpers 2. Am Fluidschlauch 3 finden sich keine Komponenten der Anschlusseinrichtung 16.

Die Anschlusseinrichtungen 16 ermöglichen das Anschließen des zugeordneten Fluidschlauches 3 im Rahmen einer einfachen Steckverbindung. Um die Fluidverbindung zu lösen, wird der Fluidschlauch 3 nach vorheriger Manipulation an der zugeordneten Anschlusseinrichtung 16 einfach herausgezogen.

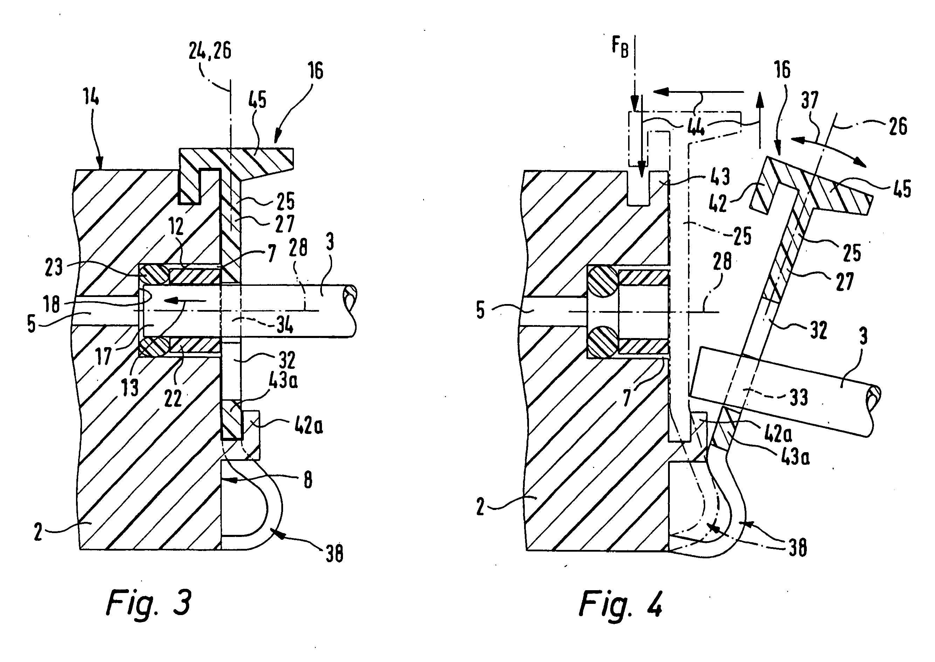

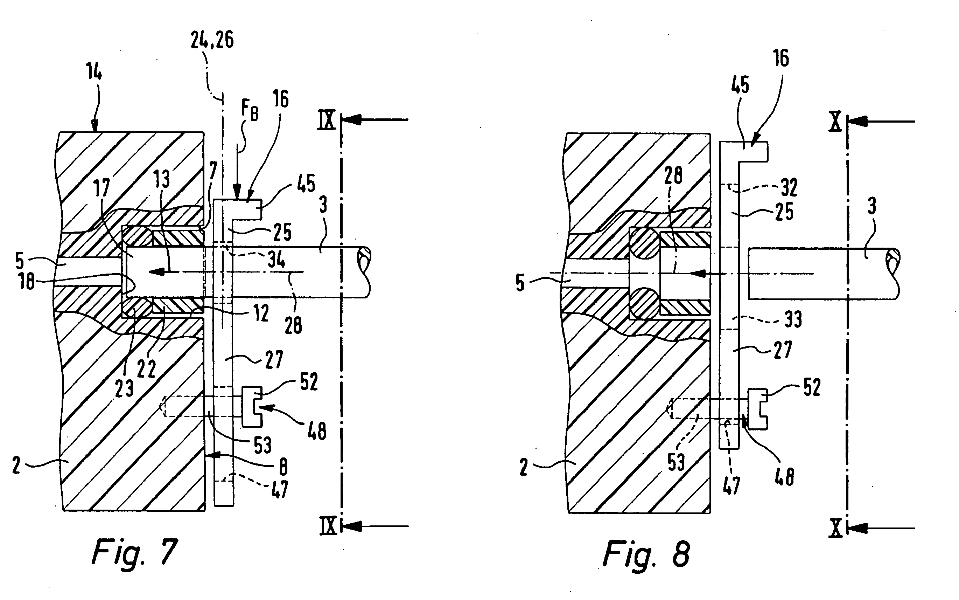

Anhand insbesondere der Figuren 3 und 7 ist gut zu erkennen, dass der angeschlossene Fluidschlauch 3 mit seinem im Folgenden als Anschlussende 17 bezeichneten Endabschnitt durch die Anschlussöffnung 7 hindurch in den sich daran anschließenden Kanalendabschnitt 12 eintaucht. Die Einstecktiefe wird durch eine Anschlagfläche 18 begrenzt, die zu einer Ringstufe im Übergangsbereich zwischen dem Kanalendabschnitt 12 und dem sich daran anschließenden Längenabschnitt des Fluidkanals 5 gehört und die axial nach außen orientiert ist. Beim Einstecken trifft der Fluidschlauch 3 mit der Stirnfläche seines Anschlussendes 17 auf die Anschlagfläche 18 auf.

Das Anschlussende 17 des eingesteckten Fluidschlauches 3 ist in radialer Richtung bezüglich des Anschlusskörpers 2 abgestützt. Die Abstützfunktion kann der Anschlusskörper 2 unmittelbar selbst übernehmen, wenn der Kanalendabschnitt 12 einen dem nominalen Außendurchmesser des Fluidschlauches 3 entsprechenden Innendurchmesser aufweist.

Abweichend hiervon hat der Kanalendabschnitt 12 bei den Ausführungsbeispielen einen größeren Querschnitt als der Fluidschlauch 3. Den Zwischenraum füllt eine in den Kanalendabschnitt 12 eingesetzte und bevorzugt eingepresste Zentrierhülse 22 aus. Deren Innendurchmesser entspricht im Wesentlichen dem nominalen Außendurchmesser des Fluidschlauches 3, wobei ersichtlich ist, dass man durch Verwendung von Zentrierhülsen 22 unterschiedlicher Innendurchmesser eine Anpassung des Anschlusskörpers 2 an Fluidschläuche 3 unterschiedlicher nominaler Außendurchmesser vornehmen kann.

Die Zentrierhülse 22 kann eine Metallhülse sein, sie besteht vorzugsweise jedoch aus Kunststoffmaterial.

In dem Kanalendabschnitt 12 befindet sich des Weiteren ein Dichtungsring 23. Er ist so angeordnet, dass er vom Anschlussende 17 des eingesteckten Fluidschlauches 3 durchsetzt wird und an dessen Außenumfang dichtend anliegt. Gleichzeitig stützt er sich dichtend an der Begrenzungsfläche des Kanalendabschnittes 12 ab. Dadurch ist ein Entweichen von Druckmedium am Fluidschlauch 3 vorbei verhindert.

Der Dichtungsring 23 ist zweckmäßigerweise mit bezüglich der Zentrierhülse 22 koaxialer Anordnung axial zwischen der Zentrierhülse 22 und der Anschlagfläche 18 platziert. Auf diese Weise wird er durch die Zentrierhülse 22 in dem Kanalendabschnitt 12 verliersicher gehalten.

Jede Anschlusseinrichtung 16 enthält einen relativ zum Anschlusskörper 2 in Richtung einer Betätigungsachse 24 verschiebbaren Halteschieber 25. Der Halteschieber 25 ist insbesondere ein längliches Gebilde, wobei seine Längsachse 26 vorzugsweise mit der Betätigungsachse 24 zusammenfällt.

Der Halteschieber 25 ist der Anschlussfläche 8 vorgelagert. Vor jeder Anschlussöffnung 7 erstreckt sich ein Halteschieber 25, der die zugeordnete Anschlussöffnung 7 stellungsabhängig in mehr oder weniger großem Maße überdeckt.

Der Halteschieber ist zweckmäßigerweise als Flachschieber ausgeführt. Er verfügt über ein im Wesentlichen plattenförmiges Schieber-Hauptelement 27, das derart vor der Anschlussfläche 8 angeordnet oder positionierbar ist, dass seine Hauptausdehnungsebene rechtwinkelig zur Längsachse 28 der zugeordneten Anschlussöffnung 7 orientiert ist. Diese Längsachse 28 ist gleichzeitig die Längsachse des Kanalendabschnittes 12.

Der Zustand, den der Halteschieber 25 einnimmt, wenn er so positioniert ist, dass die Betätigungsachse 24 rechtwinkelig zu der Längsachse 28 verläuft, sei im Folgenden als Umschaltzustand bezeichnet. Bei Einnahme dieses Umschaltzustandes kann der Halteschieber 25 zwischen einer in Figur 4 in strichpunktierten Linien und in Figur 8 in durchgezogenen Linien abgebildeten Freigabestellung und einer aus Figuren 3 und 7 hervorgehenden Haltestellung umgeschaltet werden. Das Umschalten findet durch einen Verschiebevorgang statt, wobei der Halteschieber 25 durch manuelle Einwirkung längs der Betätigungsachse 24, insbesondere linear, verschoben wird.

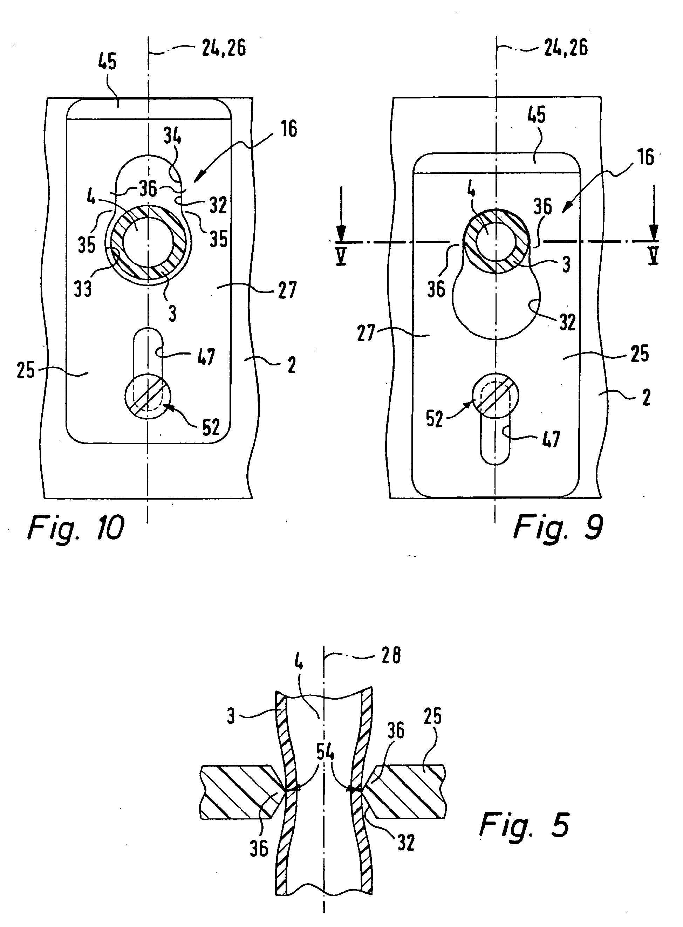

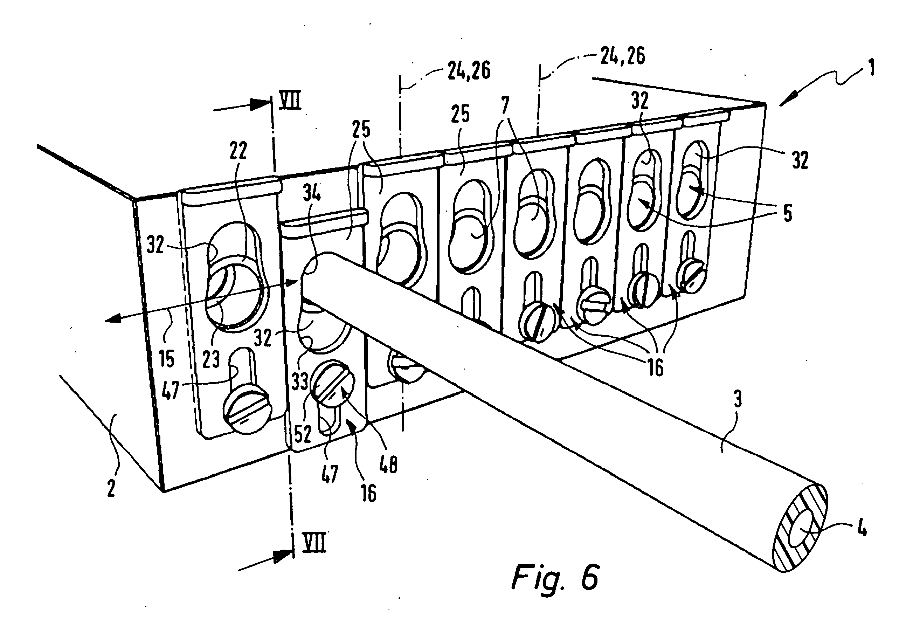

Die Haltestellung ist auch noch in Figuren 5 und 9 sowie, in Verbindung mit dem eingesteckt abgebildeten Fluidschlauch 3, auch noch in Figuren 1 und 6 gezeigt. Die Figur 10 zeigt die Freigabestellung.

Der Halteschieber 25 ist im Bereich seines Schieber-Hauptelements 27 von einer Durchtrittsöffnung 32 durchsetzt. Diese hat einen länglichen Querschnitt und erstreckt sich längs der. Längsachse 26. Sie hat einen sich über ihre Länge hinweg verändernden Querschnitt mit einem Durchsteckabschnitt 33 größerer Breite und einem sich daran in Richtung der Betätigungsachse 24 anschließenden Halteabschnitt 34 geringerer Breite. Am einfachsten lässt sich diese Kontur durch eine schlüssellochförmige Gestaltung der Durchtrittsöffnung 32 erreichen, wie sie aus Figuren 9 und 10 gut ersichtlich ist.

Die beiden stirnseitigen Endabschnitte der länglichen Durchtrittsöffnung 32 sind zweckmäßigerweise konkav gewölbt. Die Übergangsbereiche 35 zwischen den beiden Abschnitten 33, 34 der Durchtrittsöffnung 32 sind insbesondere abgerundet.

Die rechtwinkelig zu der Betätigungsachse 24 gemessenen Breitenabmessungen des Durchsteckabschnittes 33 sind größer als der nominale Außendurchmesser des Fluidschlauches 3. Unter dem nominalen Außendurchmesser des Fluidschlauches 3 ist der im unverformten Zustand gemessene Außendurchmesser zu verstehen.

Durch diese gegenseitige maßliche Abstimmung ist gewährleistet, dass der Fluidschlauch 3 ohne Behinderung im Bereich des Durchsteckabschnittes 33 durch die Durchtrittsöffnung 32 hindurchsteckbar ist.

Im Gegensatz dazu ist die entsprechend gemessene Breite des Halteabschnittes 34 geringer als der nominale Außendurchmesser des Fluidschlauches 3. Wenn der Fluidschlauch 3 die Durchtrittsöffnung 32 im Bereich des Halteabschnittes 34 durchsetzt, erfährt er durch die den Halteabschnitt 34 seitlich begrenzenden Schieberabschnitte 36 eine radiale Beaufschlagung, die dazu führt, dass die Schlauchwandung des Fluidschlauches 3, insbesondere in radialer Richtung, elastisch verformt wird. Aufgrund der sich hierbei aufbauenden Rückstellkräfte ergibt sich eine klemmende Fixierung des Fluidschlauches 3 in dem Halteabschnitt 34.

Gemäß der Schnittdarstellung in Figur 5 kann der Fluidschlauch 3 durch die ihn beaufschlagenden Schieberabschnitte 36 eine gewisse Einschnürung erfahren. Dies ist in Figur 5 jedoch übertrieben stark abgebildet. In der Regel wird die Einschnürung nur minimal ausfallen, sodass der Fluiddurchsatz durch den Fluidschlauch 3 nicht nennenswert beeinträchtigt wird.

Bei dem Ausführungsbeispiel der Figuren 6 bis 10 befindet sich der Halteschieber 25 ständig in der oben als Umschaltzustand erläuterten Position. Um einen Fluidschlauch 3 anzuschließen, wird der Halteschieber 25 durch Verschieben längs der Betätigungsachse 24 so positioniert, dass der Durchsteckabschnitt 33 der Durchtrittsöffnung 32 mit der Anschlussöffnung 7 koaxial fluchtet. Diese Stellung ist in Figuren 8 und 10 gezeigt. Der Fluidschlauch 3 kann nun durch den Durchsteckabschnitt 33 hindurch in den Kanalendabschnitt 12 eingesteckt werden.

Nach diesem Einstecken wird manuell eine Betätigungskraft F_{B} auf den Halteschieber 25 ausgeübt. Dadurch wird die Durchtrittsöffnung 32 mit ihrem Halteabschnitt 34 quer zur Schlauch-Längsrichtung auf den Fluidschlauch 3 aufgeschoben. Dies ergibt die schon erwähnte Haltestellung, in der der Fluidschlauch 3 durch den Halteschieber 25 derart klemmend am Außenumfang beaufschlagt ist, dass er nicht mehr herausgezogen werden kann.

Um den Fluidschlauch 3 wieder zu lösen, ist der Halteschieber 25 lediglich in der entgegengesetzten Richtung zu verlagern, bis er neuerlich die Freigabestellung einnimmt, die das Herausziehen des Fluidschlauches 3 ermöglicht.

Diese Funktionsbeschreibung gilt entsprechend für das Ausführungsbeispiel der Figuren 1 bis 4, allerdings mit der Besonderheit, dass hier der Halteschieber 25 zusätzlich noch über eine weitere Beweglichkeit verfügt, die es ermöglicht, den Fluidschlauch 3 schon zu einem früheren Zeitpunkt durch den Durchsteckabschnitt 33 hindurchzustecken. Diese weitere Bewegungsmöglichkeit besteht in einer durch einen Doppelpfeil angedeuteten Schwenkbewegung 37 im Sinne einer Annäherung oder einer Entfernung bezüglich des Anschlusskörpers 2. Der Fluidschlauch 3 kann hier im vom Anschlusskörper weggeschwenkten Zustand des Halteschiebers 25 durch den Durchsteckabschnitt 33 hindurchgeführt werden und wird anschließend, beim Heranschwenken des Halteschiebers 25 an den Anschlusskörper 2, in die Anschlussöffnung 7 eingeführt. Ist der Halteschieber 25 komplett herangeschwenkt, befindet er sich in dem schon erläuterten Umschaltzustand, und es kann nun durch das schon erläuterte Aufbringen der Betätigungskraft F_{B} das Umschalten in die Haltestellung vorgenommen werden.

Allen Ausführungsbeispielen ist gemeinsam, dass der angeschlossene Fluidschlauch 3 jeweils unmittelbar selbst durch die Durchtrittsöffnung 32 des Halteschiebers 25 hindurch in die Anschlussöffnung 7 des Anschlusskörpers 2 eingesteckt ist. Die Schnittstelle der Verbindungsmaßnahmen liegt also unmittelbar am Fluidschlauch, der mithin keiner vorherigen Bestückung mit irgendwelchen zusätzlichen Anschlusssteckern bedarf.

Die Bauform mit einer zusätzlich zu der linearen Verschiebemöglichkeit vorhandenen Schwenkmöglichkeit 37 eignet sich insbesondere für eine kostengünstige Realisierungsform mit aus Kunststoffmaterial bestehendem Halteschieber 25, der einstückig an den insoweit ebenfalls aus Kunststoffmaterial bestehenden Anschlusskörper 2 angeformt ist. Das gesamte Bauteil kann hier kostengünstig in Kunststoff-Spritzgießtechnik hergestellt werden, ohne dass die Notwendigkeit bestünde, die Halteschieber 25 nachträglich mechanisch am Anschlusskörper 2 zu fixieren.

Konkret sieht das Ausführungsbeispiel der Figuren 1 bis 4 vor, dass der Halteschieber 25 über einen elastisch verformbaren Gelenkabschnitt 38 an dem Anschlusskörper 2 aufgehängt ist, wobei dieser Gelenkabschnitt 38 den Freiheitsgrad für die Schwenkbewegung 37 wie auch für eine Linearbewegung des Halteschiebers 25 in Richtung seiner Längsachse 26 bietet.

Der Gelenkabschnitt 38 befindet sich zweckmäßigerweise am einen der beiden längs orientierten Endabschnitte des Halteschiebers 25. Über diesen Gelenkabschnitt 38 kann bei Bedarf die schon erwähnte einstückige Verbindung zwischen dem Halteschieber 25 und dem Anschlusskörper 2 hergestellt sein.

Bevorzugt ist der Halteschieber 25, insbesondere an seinem dem Gelenkabschnitt 38 entgegengesetzten Endabschnitt, mit einer ersten Hakenstruktur 42 ausgestattet. Selbige weist in Richtung des Gelenkabschnitts 38. Am Anschlusskörper 2 ist eine komplementäre erste Verankerungsstruktur 43 ausgebildet, mit der die erste Hakenstruktur 42 bei herangeschwenktem Halteschieber 25 in Verhakungseingriff bringbar ist.

Der Gelenkabschnitt 38 ist zweckmäßigerweise so ausgebildet, dass er den Halteschieber 25 normalerweise in einer Position hält, die es der ersten Hakenstruktur 32 nicht ermöglicht, allein durch Verschwenken 37 in oder außer Eingriff mit der ersten Verankerungsstruktur 43 zu gelangen. Um diese Maßnahmen zu ergreifen, bedarf es einer der Schwenkbewegung 37 überlagerten Zugbeaufschlagung des Halteschiebers 25 in Richtung seiner Längsachse 26 und hierbei weg von dem Gelenkabschnitt 38. Der Gelenkabschnitt 38 wird hierbei elastisch gedehnt, und die erste Hakenstruktur 42 kann über die erste Verankerungsstruktur 43 hinwegbewegt werden. Beim anschließenden Loslassen des Halteschiebers 25 wird die erste Hakenstruktur 42 durch den Gelenkabschnitt 38 auf Zug beaufschlagt, im Sinne eines Eingreifens in die erste Verankerungsstruktur 43.

Dieser Bewegungsablauf ist in Figur 4 durch die drei Pfeile 44 angedeutet.

Schon während dieses Bewegungsablaufes 44 kann der Fluidschlauch 3 ein Stückweit durch die Durchtrittsöffnung 32 hindurchgesteckt sein, wie dies in Figur 4 angedeutet ist. Er wird dann beim Heranschwenken des Halteschiebers 25 an den Anschlusskörper 2 in die Anschlussöffnung 7 eingefädelt. Alternativ kann der Fluidschlauch 3 aber auch erst dann einge-führt werden, nachdem der Halteschieber 25 in den Umschaltzustand verbracht wurde, indem seine erste Hakenstruktur 42 im Bereich der ersten Verankerungsstruktur 43 positioniert ist.

Die durch die elastische Verformung hervorgerufene Zugkraft seitens des Gelenkabschnittes 38 reicht normalerweise nicht aus, um den Halteschieber 25 bei eingestecktem Fluidschlauch 3 in die Haltestellung zu verlagern. Hierzu wird neuerlich die schon erwähnte Betätigungskraft F_{B} aufgebracht. Gleichzeitig wird hierbei der Verhakungseingriff zwischen den beiden Strukturen 42, 43 vertieft.

Die erste Hakenstruktur 42 befindet sich zweckmäßigerweise an einem dem Gelenkabschnitt 38 entgegengesetzten Kopfabschnitt 45 des Halteschiebers 25, der gleichzeitig einen Betätigungsabschnitt bildet, der zur manuellen Einwirkung zum Zwecke der Handhabung des Halteschiebers 25 vorgesehen ist.

Der Gelenkabschnitt 38 hat zweckmäßigerweise eine gebogene oder bügelförmige Struktur. Beim Ausführungsbeispiel setzt er sich aus zwei nebeneinanderliegenden federelastischen Gelenkbügeln 46 zusammen, die funktionell mit einem Filmscharnier vergleichbar sind.

Aufgrund der Elastizität des Gelenkabschnittes 38 kann unter Umständen allein durch den Eingriff von erster Hakenstruktur 42 und erster Verankerungsstruktur 43 kein ausreichend fester Halt des Halteschiebers 25 in der Haltestellung gewährleistet werden. Es ist daher empfehlenswert, an in Richtung der Betätigungsachse 24 beabstandeter Stelle eine zweite Hakenstruktur 42a vorzustehen, die in vergleichbarer Weise wie bei den beiden ersten Strukturen 42, 43 mit einer zweiten Verankerungsstruktur 43a in Verhakungseingriff bringbar ist.

Exemplarisch ist die zweite Hakenstruktur 43a am Anschlusskörper 2 angeordnet, und die zweite Verankerungsstruktur 43a befindet sich am Halteschieber 25, wenngleich auch eine umgekehrte Anbringungsweise möglich ist, wie dies im Übrigen auch für die beiden ersten Strukturen 42, 43 gilt.

Bevorzugt ist die zweite Verankerungsstruktur 43a von dem zwischen den beiden Gelenkbügeln 46 verlaufenden Randabschnitt des Halteschiebers 25 gebildet. Die zweite Hakenstruktur 42a ragt zweckmäßigerweise von der Anschlussfläche 8 weg und zwischen den beiden Gelenkbügeln 46 hindurch, um den vorgenannten Randabschnitt des Halteschiebers 25 hintergreifen zu können.

Auf diese Weise ergibt sich eine Zwei-Punkt-Verankerung des in Haltestellung befindlichen Halteschiebers 25, sodass er sich auch hohen, auf den Fluidschlauch 3 einwirkenden Zugkräften widersetzen kann.

Bei dem Ausführungsbeispiel der Figuren 6 bis 10 ist lediglich eine lineare Verschiebbarkeit des Halteschiebers 25 vorgesehen. Es handelt sich bei ihm um ein bezüglich des Anschlusskörpers 2 zweckmäßigerweise gesondertes Bauteil, das sowohl aus Kunststoffmaterial als auch aus Metall bestehen kann. Er liegt mit seiner Rückseite gleitverschieblich an der Anschlussfläche 8 an, wobei er mindestens ein sich in Richtung der Betätigungsachse 24 erstreckendes Langloch 47 aufweist, das von einer Spannschraube 48 durchsetzt ist. Auf diese Weise liegt der Halteschieber 25 zwischen dem Anschlusskörper 2 und dem Schraubenkopf 52 der Spannschraube 48, wobei der Schraubenkopf 52 einen Durchmesser aufweist, der größer ist als die Breite des Langloches 47.

Bei gelöster, jedoch weiterhin in den Anschlusskörper 2 eingeschraubter Spannschraube 48 kann der Halteschieber 25 zwischen der Haltestellung und der Freigabestellung verschoben werden. Jede dieser Stellungen, insbesondere aber die Haltestellung, kann dadurch gesichert werden, dass die Spannschraube 48 festgezogen und dadurch der Halteschieber 25 zwischen dem Schraubenkopf 52 und dem Anschlusskörper 2 eingespannt wird. Ein versehentliches Lösen der Haltestellung wird dadurch vermieden.

Der Schraubenschaft 53 bildet bei gelöster Spannschraube 48 einen Bolzen, der als Führungselement mit den Flanken des Langloches 47 zusammenarbeiten kann. Insbesondere wenn, wie beim Ausführungsbeispiel, mehrere Halteschieber 25 mit zueinander parallelen Längsachsen Seite an Seite nebeneinanderliegend angeordnet sind, kann sich die angestrebte Verschiebeführung aber auch schon durch den gegenseitigen Kontakt der jeweils benachbarten Halteschieber 25 im Bereich ihrer Längsränder einstellen.

Der Schraubenschaft 53 oder alternativ ein anderer, das Langloch 47 durchsetzender Bolzen kann auch einen Anschlag bilden, der durch Zusammenwirken mit den das Langloch stirnseitig begrenzenden Schieberabschnitten den Verschiebeweg für den Halteschieber 25 begrenzt.

Auch an dem bezüglich des Anschlusskörpers 2 separat ausgebildeten Halteschieber 25 befindet sich einenends zweckmäßigerweise ein manuell beaufschlagbarer Betätigungsabschnitt 45 zur Einleitung der Betätigungskraft für die Verschiebebewegung des Halteschiebers 25.

Aus Figur 5 geht hervor, dass die den Halteabschnitt 34 längsseits begrenzenden Schieberabschnitte 36 eine sich nach innen, zum Halteabschnitt 34 hin, verjüngende Querschnittskontur aufweisen können. Diese Schieberabschnitte 36 können sich insbesondere schneidenartig verjüngen, unter Bildung einer linienartigen Eingriffskontur 54, die unter Umständen sogar minimal in das Material der Schlauchwandung eindringen kann, um sich effektiv darin zu verbeißen und einen formschlüssigen Widerstand gegen ein unbeabsichtigtes Herausziehen des Fluidschlauches 3 zu generieren.

## Patentansprüche

1. Fluidtechnische Vorrichtung, mit mindestens einem Anschlusskörper (2), der von mindestens einem Fluidkanal (5) durchsetzt ist, der über eine Anschlussöffnung (7) zur Außenfläche des Anschlusskörpers (2) ausmündet, und mit mindestens einem elastomere Eigenschaften aufweisenden elastischen Fluidschlauch (3), der mittels einer Anschlusseinrichtung (16) im Rahmen einer Steckverbindung an den mindestens einen Fluidkanal (5) angeschlossen oder anschließbar ist, wobei die Anschlusseinrichtung (16) einen an dem Anschlusskörper (2) in Richtung einer zur Längsachse (28) der Anschlussöffnung (7) quer verlaufenden Betätigungsachse (24) verschiebbar gelagerten oder lagerbaren Halteschieber (25) enthält, der von einer Durchtrittsöffnung (32) durchsetzt ist, die einen Durchsteckabschnitt (33) und einen diesbezüglich schmäleren, sich in Richtung der Betätigungsachse (24) daran anschließenden Halteabschnitt (34) aufweist, wobei der Halteschieber (25) wahlweise in einer Freigabestellung, in der der Durchsteckabschnitt (33) mit der Anschlussöffnung (7) fluchtet, und in einer Haltestellung, in der der Halteabschnitt (34) mit der Anschlussöffnung (7) fluchtet, positionierbar ist, **dadurch gekennzeichnet, dass** der angeschlossene Fluidschlauch (3) unmittelbar selbst durch die Durchtrittsöffnung (32) des Halteschiebers (25) hindurch in die Anschlussöffnung (7) des Anschlusskörpers (2) eingesteckt ist, wobei die Breite der Durchtrittsöffnung (32) im Bereich des Durchsteckabschnittes (33) größer und im Bereich des Halteabschnittes (34) geringer ist als der nominale Außendurchmesser des Fluidschlauches (3), derart, dass der Fluidschlauch (3) in der Freigabestellung des Halteschiebers (25) unbehindert durch die Durchtrittsöffnung (32) hindurch in die Anschlussöffnung (7) einsteckbar und aus dieser herausziehbar ist und in der Haltestellung des Halteschiebers (25) unter Verformung seiner Schlauchwandung klemmend von den den Halteabschnitt (34) seitlich begrenzenden Schieberabschnitten (36) festgehalten ist.

2. Vorrichtung nach Anspruch 1, **dadurch gekennzeichnet, dass** die Durchtrittsöffnung (32) nach Art eines Schlüsselloches gestaltet ist.

3. Vorrichtung nach Anspruch 1 oder 2, **dadurch gekennzeichnet, dass** die den Halteabschnitt (34) begrenzenden Schieberabschnitte (36) eine sich zum Halteabschnitt (34) hin verjüngende Querschnittskontur aufweisen und zweckmäßigenweise schneidenartig verjüngt sind.

4. Vorrichtung nach einem der Ansprüche 1 bis 3, **dadurch gekennzeichnet, dass** der Halteschieber (25) mindestens ein sich in Richtung der Betätigungsachse (24) erstreckendes Langloch (47) aufweist, das von einem am Anschlusskörper (2) fixierten Bolzen (53) durchsetzt ist.

5. Vorrichtung nach Anspruch 4, **dadurch gekennzeichnet, dass** der Bolzen (53) einen Anschlag bildet, der durch Kooperation mit den das Langloch (47) endseitig begrenzenden Schieberabschnitten den Verschiebeweg für den Halteschieber (25) begrenzt.

6. Vorrichtung nach Anspruch 4 oder 5, **dadurch gekennzeichnet, dass** der Bolzen vom Schaft (53) einer in den Anschlusskörper (2) eingeschraubten Spannschraube (48) gebildet ist, deren Schraubenkopf (52) ein Spannelement bildet, durch das der Halteschieber (25) zur Sicherung seiner Stellung mit dem Anschlusskörper (2) lösbar verspannbar ist.

7. Vorrichtung nach einem der Ansprüche 1 bis 6, **dadurch gekennzeichnet, dass** der Halteschieber (25) ein bezüglich des Anschlusskörpers (2) gesondertes Bauteil ist.

8. Vorrichtung nach einem der Ansprüche 1 bis 7, **dadurch gekennzeichnet, dass** der Halteschieber (25) aus Metall besteht.

9. Vorrichtung nach einem der.Ansprüche 1 bis 8, **dadurch gekennzeichnet, dass** der Halteschieber (25) über einen elastisch verformbaren Gelenkabschnitt (38) derart beweglich am Anschlusskörper (2) fixiert ist, dass er in Richtung seiner Längsachse (26) verlagerbar und zweckmäßigerweise auch an den Anschlusskörper (2) heran und von diesem weg verschwenkbar ist, wobei der Gelenkabschnitt (38) zweckmäßigerweise aus mindestens einem federelastisch verformbaren Gelenkbügel (46) besteht.

10. Vorrichtung nach Anspruch 9, **dadurch gekennzeichnet, dass** der Halteschieber (25) im an den Anschlusskörper (2) herangeschwenkten Zustand durch Verlagerung in Richtung seiner mit der Betätigungsachse (24) zusammenfallenden Längsachse (26) zwischen einer das Verschwenken ermöglichenden entriegelten Stellung und einer das Verschwenken verhindernden verriegelten Stellung verstellbar ist.

11. Vorrichtung nach Anspruch 10, **dadurch gekennzeichnet, dass** am Halteschieber (25) und/oder am Anschlusskörper (2) mindestens eine Hakenstruktur (42, 42a) angeordnet ist, die eine am jeweils anderen Element (2, 25) ausgebildete Verankerungsstruktur (43, 43a) hintergreifen kann, wobei das In-oder Außereingriffbringen zwischen der Hakenstruktur (42, 42a) und der Verankerungsstruktur (43, 43a) durch in Richtung der Betätigungsachse (24) erfolgendes Verschieben des an den Anschlusskörper (2) herangeschwenkten Halteschiebers (25) bewirkt werden kann.

12. Vorrichtung nach Anspruch 11, **dadurch gekennzeichnet, dass** der Halteschieber (25) durch den Gelenkabschnitt (38) derart beaufschlagt ist, dass die mindestens eine Hakenstruktur (42, 42a) in der Eingriffsrichtung mit der Verankerungsstruktur (43, 43a) beaufschlagt ist.

13. Vorrichtung nach einem der Ansprüche 9 bis 12, **dadurch gekennzeichnet, dass** der Halteschieber (25) über den Gelenkabschnitt (38) einstückig mit dem Anschlusskörper (2) verbunden ist.

14. Vorrichtung nach einem der Ansprüche 9 bis 13, **dadurch gekennzeichnet, dass** der Halteschieber (25), der Gelenkab-schnitt (38) und der mit dem Gelenkabschnitt (38) verbundene Bereich des Anschlusskörpers (2) aus Kunststoffmaterial bestehen.

15. Vorrichtung nach einem der Ansprüche 1 bis 14, **dadurch gekennzeichnet, dass** in dem sich an die Anschlussöffnung (7) anschließenden Kanalendabschnitt (12) des Fluidkanals (5) eine den eingesteckten Fluidschlauch (3) umschließende Zentrierhülse (22) eingesetzt und insbesondere eingepresst ist.

16. Vorrichtung nach einem der Ansprüche 1 bis 15, **dadurch gekennzeichnet, dass** in dem sich an die Anschlussöffnung (7) anschließenden Kanalendabschnitt (12) des Fluidkanals (5) ein den eingesteckten Fluidschlauch (3) umschließender Dichtungsring (23) angeordnet ist, der zweckmäßigerweise axial zwischen der Zentrierhülse (22) und einer dieser axial innen gegenüberliegenden Begrenzungsfläche (18) des Fluidkanals (5) angeordnet ist.

17. Vorrichtung nach einem der Ansprüche 1 bis 16, **dadurch gekennzeichnet, dass** an dem Anschlusskörper (2) mehrere in einer Aufreihungsrichtung (15) aufeinanderfolgende Anschlussöffnungen (7) vorhanden sind, denen jeweils eine Anschlusseinrichtung (16) mit einem Halteschieber (25) zugeordnet ist, wobei die Halteschieber (25) mit zueinander parallelen Längsachsen (26) längsseits nebeneinander angeordnet sind, und wobei Zeckmäßigerweise benachbarte Halteschieber (25) mit ihren längsseitigen Randabschnitten unter gegenseitiger Führung aneinander anliegen.

18. Vorrichtung nach einem der Ansprüche 1 bis 17, **dadurch gekennzeichnet, dass** der Anschlusskörper (2) von einem mit mindestens einem Ventil (6) bestückten Ventilträger gebildet ist.

## Claims

1. Fluidic device with at least one connection body (2), through which passes at least one fluid passage (5) which leads out via a connection orifice (7) to the outer surface of the connection body (2), and with at least one flexible fluid hose (3) with elastomeric properties, which is or may be connected by means of a connection device (16), as part of a plug-in connection, to the fluid passage or passages (5), wherein the connection device (16) contains a holding slide (25), slidably mounted or mountable on the connection body (2) in the direction of an axis of actuation (24) running at right-angles to the longitudinal axis (28) of the connection orifice (7), through which runs a through passage (32) which has an insertion section (33) and a holding section (34), narrower than the former and adjoining it in the direction of the axis of actuation (24), wherein the holding slide (25) may be positioned either in a release position, in which the insertion section (33) is flush with the connection orifice (7), or in a holding position in which the holding section (34) is aligned with the connection orifice (7), **characterised in that** the connected fluid hose (3) is inserted directly itself through the through passage (32) of the holding slide (25) into the connection orifice (7) of the connection body (2), wherein the width of the through passage (32) in the area of the insertion section (33) is greater, and in the area of the holding section (34) is less than the nominal outside diameter of the fluid hose (3), in such a way that the fluid hose (3) in the release position of the holding slide (25) may be inserted unimpeded through the through passage (32) into the connection orifice (7) and removed from it, and in the holding position of the holding slide (25) is held, with deformation of its hose wall, clamped by the slide sections (36) bounding the side of the holding section (34).

2. Device according to claim 1, **characterised in that** the through passage (32) is made in the manner of a keyhole.

3. Device according to claim 1 or 2, **characterised in that** the slide sections (36) bounding the holding section (34) have a cross-section contour tapering towards the holding section (34) and are expediently tapered in a blade-like manner.

4. Device according to any of claims 1 to 3, **characterised in that** the holding slide (25) has at least one oblong hole (47) extending in the direction of the axis of actuation (24), through which passes a pin (53) fixed to the connection body (2).

5. Device according to claim 4, **characterised in that** the pin (53) forms a stop which, through cooperation with the slide sections bounding the end of the oblong hole (47), defines the sliding path for the holding slide (25).

6. Device according to claim 4 or 5, **characterised in that** the pin is formed by the shank (53) of a clamping bolt (48), screwed into the connection body (2), the screw head (52) of which forms a clamping element, by means of which the holding slide (25) may be clamped releasably to the connection body (2) to secure its position.

7. Device according to any of claims 1 to 6, **characterised in that** the holding slide (25) is a separate component from the connection body (2).

8. Device according to any of claims 1 to 7, **characterised in that** the holding slide (25) is made of metal.

9. Device according to any of claims 1 to 8, **characterised in that** the holding slide (25) is fixed movably to the connection body (2) via an elastically deformable hinge section (38) in such a way that it may be displaced in the direction of its longitudinal axis (26) and expediently may also be swivelled towards and away from the connection body (2), wherein the hinge section (38) is expediently comprised of at least one spring-elastic deformable hinged bracket (46).

10. Device according to claim 9, **characterised in that** the holding slide (25), in the position in which it is swivelled on to the connection body (2), is adjustable by shifting in the direction of its longitudinal axis (26) coinciding with the axis of actuation (24) between a released position allowing swivelling, and a locked position which prevents swivelling.

11. Device according to claim 10, **characterised in that** there is provided on the holding slide (25) and/or on the connection body (2) a hook structure (42, 42a) which is able to engage behind an anchoring structure (43, 43a) formed on the respective other element (2, 25), wherein the bringing into or out of engagement between the hook structure (42, 42a) and the anchoring structure (43, 43a) may be effected by sliding the holding slide (25) swivelled on to the connection body (2) in the direction of the axis of actuation (24).

12. Device according to claim 11, **characterised in that** the holding slide (25) is pressure-loaded by the hinge section (38) in such a way that the hook structure or structures (42, 42a) is or are biased in the direction of engagement with the anchoring structure (43, 43a).

13. Device according to any of claims 9 to 12, **characterised in that** the holding slide (25) is joined integrally with the connection body (2) via the hinge section (38).

14. Device according to any of claims 9 to 13, **characterised in that** the holding slide (25), the hinge section (38) and the area of the connection body (2) joined to the hinge section (38) are made of plastic material.

15. Device according to any of claims 1 to 14, **characterised in that** a centring sleeve (22) encompassing the inserted fluid hose (3) is inserted and in particular pressed into the passage end section (12) of the fluid passage (5) adjoining the connection orifice (7).

16. Device according to any of claims 1 to 15, **characterised in that** there is provided in the passage end section (12) of the fluid passage (5) adjoining the connection orifice (7) a seal ring (23) encompassing the inserted fluid hose (3) and which is expediently located axially between the centring sleeve (22) and a boundary surface (18) of the fluid passage (5) lying opposite and axially inwards of the former.

17. Device according to any of claims 1 to 16, **characterised in that** there are provided on the connection body (2) in a direction of lining-up (15) several consecutive connection orifices (7), each assigned a connection device (16) with a holding slide (25), wherein the holding slides (25) are mounted next to one another on their long sides with parallel longitudinal axes (26), and wherein expediently adjacent holding slides (25) abut one another with their long-side edge sections, under mutual guidance.

18. Device according to any of claims 1 to 17, **characterised in that** the connection body (2) is formed by a valve carrier equipped with at least one valve (6).

## Revendications

1. Dispositif technique fluidique comportant au moins un corps de raccordement (2) traversé par au moins un canal fluidique (5) qui débouche par une ouverture de raccordement (7) vers le côté extérieur du corps de raccordement (2), et au moins un tuyau fluidique (3) élastique présentant des propriétés élastomères qui est ou peut être raccordé à l'aide d'un dispositif de raccordement (16) dans le cadre d'une liaison par emboîtement à au moins un canal fluidique (5), sachant que le dispositif de raccordement (16) contient un coulisseau de retenue (25) logé ou pouvant être logé de manière mobile sur le corps de raccordement (2) en direction d'un axe d'actionnement (24) s'étendant transversalement à l'axe longitudinal (28) de l'ouverture de raccordement (7), lequel coulisseau est traversé par une ouverture de passage (32) qui présente une section traversante (33) et une section de retenue (34) plus étroite, s'y raccordant en direction de l'axe d'actionnement (24), sachant que le coulisseau de retenue (25) peut être positionné au choix dans une position de libération, dans laquelle la section traversante (33) s'aligne sur l'ouverture de raccordement (7), et dans une position de retenue, dans laquelle la section de retenue (34) s'aligne sur l'ouverture de raccordement (7), **caractérisé en ce que** le tuyau fluidique (3) raccordé est enfiché directement lui-même par l'ouverture de passage (32) du coulisseau de retenue (25) dans l'ouverture de raccordement (7) du corps de raccordement (2), sachant que la largeur de l'ouverture de passage (32) dans la zone de la section traversante (33) est plus grande et dans la zone de la section de retenue (34) plus petite que le diamètre extérieur nominal du tuyau fluidique (3) de telle manière que le tuyau fluidique (3) dans la position de libération du coulisseau de retenue (25) puisse être enfiché et extrait sans entraves par l'ouverture de passage (32) de l'ouverture de raccordement (7) et soit maintenu dans la position de retenue du coulisseau de retenue (25) en déformant sa paroi de tuyau par serrage des sections du coulisseau (36) délimitant latéralement la section de retenue (34).

2. Dispositif selon la revendication 1, **caractérisé en ce que** l'ouverture de passage (32) est conçue comme un trou de serrure.

3. Dispositif selon la revendication 1 ou 2, **caractérisé en ce que** les sections de coulisseau (36) délimitant la section de retenue (34) présentent un contour de section se rétrécissant vers la section de retenue (34) et sont rétrécies de manière appropriée comme des lames.

4. Dispositif selon l'une quelconque des revendications 1 à 3, **caractérisé en ce que** le coulisseau de retenue (25) présente au moins un trou oblong (47) s'étendant en direction de l'axe d'actionnement (24) et traversé par un boulon (53) fixé sur le corps de raccordement (2).

5. Dispositif selon la revendication 4, **caractérisé en ce que** le boulon (53) forme une butée qui délimite, par coopération avec les sections de coulisseau délimitant côté extrémité le trou oblong (47), la course de déplacement pour le coulisseau de retenue (25).

6. Dispositif selon la revendication 4 ou 5, **caractérisé en ce que** le boulon est formé par la tige (53) d'une vis de serrage (48) vissée dans le corps de raccordement (2), dont la tête (52) forme un élément de serrage, par lequel le coulisseau de retenue (25) peut être serré de manière amovible pour le blocage de sa position avec le corps de raccordement (2).

7. Dispositif selon l'une quelconque des revendications 1 à 6, **caractérisé en ce que** le coulisseau de retenue (25) est un composant séparé du corps de raccordement (2).

8. Dispositif selon l'une quelconque des revendications 1 à 7, **caractérisé en ce que** le coulisseau de retenue (25) se compose de métal.

9. Dispositif selon l'une quelconque des revendications 1 à 8, **caractérisé en ce que** le coulisseau de retenue (25) est fixé de manière mobile par une section articulée (38) déformable élastiquement sur le corps de raccordement (2) de telle manière qu'il puisse être déplacé en direction de son axe longitudinal (26) et pivoté aussi de manière appropriée près et loin du corps de raccordement (2), sachant que la section articulée (38) se compose de manière appropriée d'au moins un étrier articulé (46) déformable élastiquement.

10. Dispositif selon la revendication 9, **caractérisé en ce que** le coulisseau de retenue (25) peut être réglé, dans l'état pivoté près du corps de raccordement (2) par le déplacement en direction de son axe longitudinal (26) coïncidant avec l'axe d'actionnement (24), entre une position déverrouillée permettant le pivotement et une position verrouillée l'empêchant.

11. Dispositif selon la revendication 10, **caractérisé en ce qu'**au moins une structure de crochet (42, 42a) est disposée sur le coulisseau de retenue (25) et/ou le corps de raccordement (2), laquelle peut venir en prise derrière une structure d'ancrage (43, 43a) réalisée sur l'autre élément respectif (2, 25), sachant que la mise en ou hors prise entre la structure de crochet (42, 42a) et la structure d'ancrage (43, 43a) peut être provoquée par le déplacement en direction de l'axe d'actionnement (24) du coulisseau de retenue (25) pivoté près du corps de raccordement (2).

12. Dispositif selon la revendication 11, **caractérisé en ce que** le coulisseau de retenue (25) est sollicité par la section articulée (38) de telle manière qu'au moins une structure de crochet (42, 42a) soit sollicitée dans le sens d'engagement avec la structure d'ancrage (43, 43a).

13. Dispositif selon l'une quelconque des revendications 9 à 12, **caractérisé en ce que** le coulisseau de retenue (25) est relié d'un seul tenant avec le corps de raccordement (2) par la section articulée (38).

14. Dispositif selon l'une quelconque des revendications 9 à 13, **caractérisé en ce que** le coulisseau de retenue (25), la section articulée (38) et la zone reliée à la section articulée (38) du corps de raccordement (2) se composent de matériau plastique.

15. Dispositif selon l'une quelconque des revendications 1 à 14, **caractérisé en ce qu'**une douille de centrage (22) entourant le tuyau fluidique (3) enfiché est insérée et en particulier enfoncée dans la section d'extrémité (12) se raccordant à l'ouverture de raccordement (7) du canal fluidique (5).

16. Dispositif selon l'une quelconque des revendications 1 à 15, **caractérisé en ce qu'**un anneau d'étanchéité (23) entourant le tuyau fluidique (3) enfiché est disposé dans la section d'extrémité (12) se raccordant à l'ouverture de raccordement (7) du canal fluidique (5), lequel anneau est disposé de manière appropriée dans le sens axial entre la douille de centrage (22) et une surface de délimitation (18) lui faisant face à l'intérieur dans le sens axial du canal fluidique (5).

17. Dispositif selon l'une quelconque des revendications 1 à 16, **caractérisé en ce que** plusieurs ouvertures de raccordement (7) successives dans un sens de juxtaposition (15) sont présentes sur le corps de raccordement (2), auxquelles est associé respectivement un dispositif de raccordement (16) avec un coulisseau de retenue (25), sachant que les coulisseaux de retenue (25) sont disposés avec des axes longitudinaux parallèles entre eux les uns à côté des autres du côté longueur, et sachant que des coulisseaux de retenue (25) contigus reposent les uns sur les autres de manière appropriée avec leurs sections de bord côté longueur par guidage mutuel.

18. Dispositif selon l'une quelconque des revendications 1 à 17, **caractérisé en ce que** le corps de raccordement (2) est formé par un porte-soupape équipé d'au moins une soupape (6).
